Europäisches Patentamt

European Patent Office

Office européen des brevets

(11) Veröffentlichungsnummer: **0 151 795**
**B1**

(12) **EUROPÄISCHE PATENTSCHRIFT**

(45) Veröffentlichungstag der Patentschrift:
02.11.88

(51) Int. Cl.⁴: **G 01 N 27/56**

(21) Anmeldenummer: **84116232.4**

(22) Anmeldetag: **22.12.84**

(54) Polarographischer Sauerstoffmessfühler.

(30) Priorität: **14.02.84 DE 3405162**

(43) Veröffentlichungstag der Anmeldung:
**21.08.85 Patentblatt 85/34**

(45) Bekanntmachung des Hinweises auf die Patenterteilung:
**02.11.88 Patentblatt 88/44**

(84) Benannte Vertragsstaaten:
**DE FR GB IT**

(56) Entgegenhaltungen:
**EP-A-0 071 971**
**DE-A-2 348 505**
**DE-A-2 707 983**
**DE-A-2 736 451**
**DE-A-3 203 612**
**GB-A-2 067 294**
**US-A-3 928 161**
**US-A-4 184 934**

(73) Patentinhaber: **ROBERT BOSCH GMBH, Postfach 50, D-7000 Stuttgart 1 (DE)**

(72) Erfinder: **Stahl, Roland, Dipl.- Ing., Finkenweg 11, D-7141 Freiberg (DE)**

## Beschreibung

Die Erfindung geht aus von einem Sauerstoffmeßfühler nach der Gattung des Hauptanspruchs; bei einem solchen Sauerstoffmeßfühler, der aus der EP-A-0 071 971 bekannt ist, findet ein Festelektrolytrohr Verwendung, daß meßgasseits einen Boden aufweist, auf der Oberfläche seiner Außenseite eine schichtförmige, gasdurchlässige Meßelektrode trägt und auf der Oberfläche seiner Innenseite eine schichtförmige Gegenelektrode aufweist; an die Meßelektrode und die Gegenelektrode ist bei Betrieb des Meßfühlers eine Gleichspannung anlegbar. Das Festelektrolytrohr ist in seinem Innenraum mit einem elektrischen Widerstandsheizelement versehen. Das Festelektrolytrohr mit seinen Elektroden ist außerdem seitlich und in seinem bodennahen Bereich mit Abstand von einem rohrartigen Bauelement umgeben, dessen bodennaher Endabschnitt ein Diffusionswiderstandselement hat; dieses Diffusionswiderstandselement besteht aus porösem, keramischem Material und weist einen definierten Diffusionswiderstand für Sauerstoffmoleküle auf. Der dem Diffusionswiderstandselement gegenüberliegende Endabschnitt des Schutzrohres ist derart im Sauerstoffmeßfühler festgelegt, so daß kein weiterer Meßgasanteil in den Innenraum des Schutzrohres gelangen kann. Meßfühler dieser Bauart, die aufgrund des zwischen Schutzrohr und Festelektrolytrohr befindlichen relativ großen Volumens bei Inbetriebnahme eine verhältnismäßig lange Zeitdauer bis zur Betriebsbereitschaft des Meßfühlers aufweisen, sind nicht für alle Anwendungsfälle geeignet; auch zum Einsatz für die Abgasregelung von Brennkraftmaschinen in Kraftfahrzeugen sind derartige Sauerstoffmeßfühler nicht zweckmäßig.

Anstelle von keramischem porösem Material für das Diffusionswiderstandselement können bei derartigen Meßfühlern auch enge Kanäle Verwendung finden (DE-OS-2 923 483).

Die Erfindung ist im Anspruch 1 dargelegt.

Durch die in den abhängigen Ansprüchen aufgeführten Maßnahmen sind vorteilhafte Weiterbildungen und Verbesserungen des im Anspruch 1 angegebenen Sauerstoffmeßfühlers möglich.

Die Erfindung wird anhand der Zeichnung in der nachfolgenden Beschreibung näher erläutert. Es zeigen Figur 1 einen Sauerstoffmeßfühler mit einem Längsschnitt durch seinen meßgasseitigen Abschnitt in vergrößerter Darstellung, Figur 2 einen Längsschnitt durch den meßgasseitigen Abschnitt einer zweiten Ausführungsform eines Meßfühlers in vergrößerter Darstellung und Figur 3 den Querschnitt durch den meßgasseitigen Abschnitt einer dritten Ausführungsform eines Sauerstoffmeßfühlers in noch weiter vergrößerter Darstellung mit dem erfindungsgemäßen Schutzrohr.

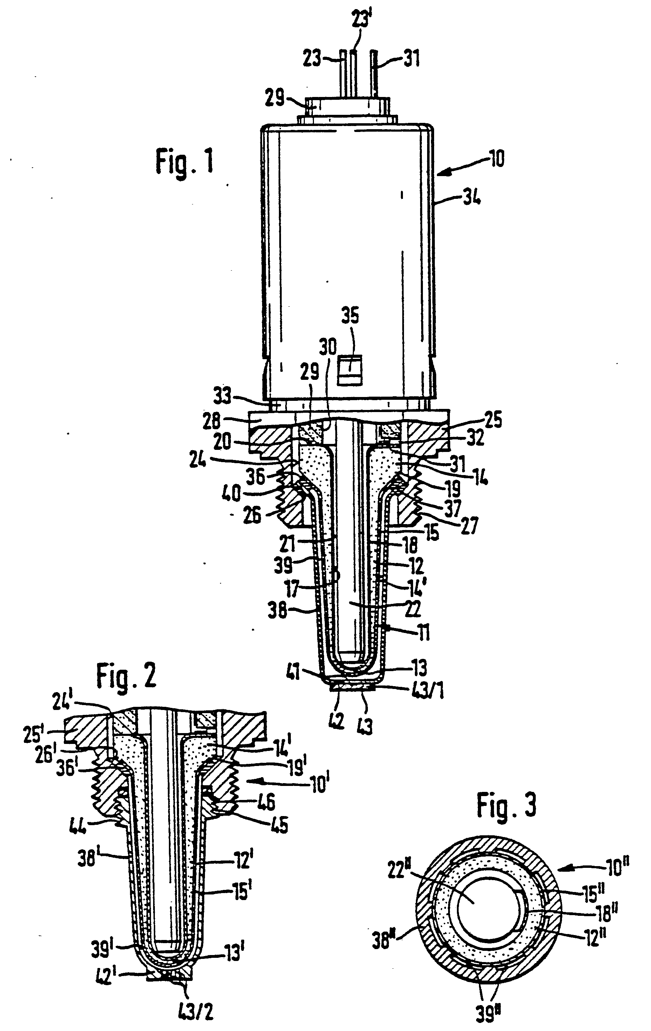

Der in Figur 1 dargestellte Sauerstoffmeßfühler 10 entspricht in seinem Aufbau grundsätzlich dem in der DE-OS-2 942 494 dargestellten Sauerstoffmeßfühler, wobei sein Sensorelement 11 im vorliegendem Falle nach dem polarographischen Prinzip arbeiten soll. Dieses Sensorelement 11 besitzt einen Sauerstoffionen leitenden Festelektrolyten 12, welcher rohrförmig ausgebildet ist, an seinem meßgasseitigen Ende mit einem Boden 13 versehen ist und an dessen meßgasfernen Endabschnitt ein Flansch 14 mit angeformt ist. Dieses Festelektrolytrohr 12 besteht aus stabilisiertem Zirkondioxid, trägt auf der Oberfläche seiner Außenseite 14' eine gasdurchlässige Meßelektrodenschicht 15 und zumindestens auf einem Teil der Oberfläche seiner Innenseite 17 eine schichtförmige Gegenelektrode 18. Die Meßelektrode 15, die beispielsweise aus Platin bestehen kann, endet dabei mit ihrem meßgasfernen Endabschnitt auf der meßgasseits weisenden Schulter 19 des Festelektrolytrohr-Flansches 14 und ist in diesem Bereich bevorzugt mit einer gasundurchlässigen Isolierschicht (nicht dargestellt) unterlegt. Die Gegenelektrode 18, die ebenfalls aus schichtförmigem Platin bestehen kann, reicht bis in den Boden 13 des Festelektrolytrohres 12 hinab und endet andererseits auf der meßgasfernen Stirnfläche 20 des Festelektrolytrohres 12.

In den Innenraum 21 des Festelektrolytrohres 12 ragt bei dieser bevorzugten Ausführungsform ein stabförmiges Widerstandsheizelement 22 hinein, das in bekannter Weise (siehe DE-GbmS-8 101 584) bis zum Boden 13 des Festelektrolytrohres 12 führt und mit seinem Umfang nahe, jedoch elektrisch isoliert bis nahe an die Innenseite 17 des Festelektrolytrohres 12 reicht. Das stabförmige Widerstandsheizelement 22 ragt mit seinen Anschlußdrähten 23 und 23' aus dem meßgasfernen Ende des Sauerstoffmeßfühlers 10 heraus.

Der meßgasferne Endabschnitt des Festelektrolytrohres 12 einschließlich des Flansches 14 ist in der Längsbohrung 24 eines Metallgehäuses 25 untergebracht; die Längsbohrung 24 des Metallgehäuses 25 ist dabei mit einer zur meßgasfernen Seite weisenden Schulter 26 versehen. Zum Einbau des Sauerstoffmeßfühlers 10 in ein nicht dargestelltes meßgasführendes Rohr ist das Metallgehäuse 25 auf seiner Mantelfläche in bekannter Weise mit einem Einschraubgewinde 27 und meßgasfern davon mit einem Schlüsselsechskant 28 ausgestattet; auf die Darstellung von gegebenenfalls erforderlichen Abdichtmitteln wurde hier verzichtet.

In der Längsbohrung 24 des Metallgehäuses 25 schließt sich der Stirnfläche 20 des Festelektrolytrohres 12 ein keramischer Stützkörper 29 an, in dessen Längsbohrung 30 sich auch noch ein Teil des stabförmigen Widerstandsheizelements 22 erstreckt. In diesem keramischen Stützkörper 29 verläuft in Längsrichtung auch ein Anschlußdraht 31, welcher meßgasfern aus dem Sauerstoffmeßfühler 10 herausragt und mit seinem abgewinkelten meßgasnahen Endabschnitt auf demjenigen Endabschnitt der Gegenelektrode 18 fest aufliegt, der sich auf der Stirnfläche 20 des Festelektrolytrohres 12 erstreckt; der meßgasnahe, abgewinkelte Endabschnitt des Anschlußdrahtes 31 ist in einer radialverlaufenden Führungsnut 32 im meßgasnahen Endabschnitt des keramischen Stützkörpers 29 fixiert. Mittels einer nicht dargestellten Tellerfeder wird der keramische Stützkörper 29 mit seinem meßgasnahen Ende gegen die Stirnfläche 20 des Festelektrolytrohrs 12 gepreßt. Auf dem meßgasfernen Stutzen 33 des Metallgehäuses 25 ist in bekannter Weise eine metallische Schutzhülse 34 aufgeschoben und mittels mehrerer Einschernasen 35 daran befestigt.

Das Festelektrolytrohr 12 liegt mit der meßgasnahen Schulter 19 seines Flansches 14 auf einem ersten Kontakt- und Dichtring 36 derart auf, so daß der meßgasferne Endabschnitt der Meßelektrodenschicht 15 unter diesem ersten Kontakt- und Dichtring 36 zu liegen kommt, jedoch meßgasfern nicht darunter hervorragt; als Material für den ersten Kontakt- und Dichtring 36 eignet sich besonders gut weiches Metall (Kuppler, Stahl). Die meßgasseitige Fläche dieses ersten Kontakt- und Dichtringes 36 liegt auf dem meßgasfernen Flansch 37 eines Schutzrohres 38, welches den meßgasseits aus dem Metallgehäuse 25 herausragenden Abschnitt des Festelektrolytrohres 12 umgibt; dieses Schutzrohr 38 bildet mit der Meßelektrodenschicht 15 auf dem Festelektrolytrohr 12 einen möglichst kleinen Zwischenraum 39, welcher dem innerhalb des Schutzrohres 38 befindlichen Meßgas den Zutritt zur Meßelektrode 15 erlaubt.

Zwischen der meßgasnahen Seite des Schutzrohr-Flansches 37 und der Schulter 26 der Metallgehäuse-Längsbohrung 24 ist noch ein zweiter Kontakt- und Dichtring 40 eingefügt, der aus dem gleichen Material wie der erste Kontakt- und Dichtring 36 besteht und dafür sorgt, daß kein Meßgas mit der Gegenelektrode 18 in Berührung kommt. Infolge des bereits erwähnten (nicht dargestellten) Federelementes im von der Schutzhülse 34 umgebenden Bereich des Sauerstoffmeßfühlers 10 wird über den keramischen Stützkörper 29 und den Flansch 14 des Festelektrolytrohres 12 Druck auf den ersten Kontakt- und Dichtring 36, den Flansch 37 des Schutzrohres 38, den zweiten Kontakt- und Dichtring 40 und damit auch auf die Schulter 26 der Längsbohrung 24 des Metallgehäuses 25 ausgeübt und demzufolge der Sauerstoffmeßfühler 10 meßgasseits abgedichtet. Die Meßelektrodenschicht 15 ist über den ersten Kontakt- und Dichtring 36, den Schutzrohr-Flansch 37 und den zweiten Kontakt- und Dichtring 40 mit dem Metallgehäuse 35 elektrisch verbunden, welches gleichzeitig als ein Kontakt für die zum Betrieb des Sauerstoffmeßfühlers 10 erforderliche (nicht dargestellte) Gleichspannungsquelle dient. Der zweite Anschluß an der genannten Gleichstromquelle bildet der meßgasfern aus dem Sauerstoffmeßfühler 10 herausragenden Anschlußdraht 31, welcher mit der Gegenelektrode 18 auf dem Festelektrolytrohr 12 elektrisch in Verbindung steht.

Das Schutzrohr 38 ist mit einem Durchbruch 41 versehen, welcher in bevorzugter Weise im meßgasseitigen Stirnbereich 42 des Schutzrohres 38 angeordnet ist. Dieser Durchbruch 41 ist mittels eines plättchenförmigen Trägers 43 mit einem Diffusionswiderstandselement 43/1 abgedichtet; dieses Diffusionswiderstandselement 43/1 wird von gasdurchlässigen Poren gebildet, wobei der Träger 43 aus Keramik oder Sintermetall bestehen kann und durch Löten, Kitten oder ähnlichem am Schutzrohr 38 abdichtend befestigt ist. Der Träger 43 wird in bevorzugter Weise auf der Außenseite des Schutzrohres 38 aufgebracht, kann alternativ aber auch an der Innenseite des Schutzrohres 38 befestigt sein. Je nach Anwendungszweck eines solchen Sauerstoffmeßfühlers 10 ist die Größe der Poren als Diffusionswiderstandselement 43/1 unterschiedlich: Soll im Meßgas der Volumenanteil des Sauerstoffs gemessen werden, dann muß das Diffusionswiderstandselement 43/1 Poren-Durchmesser größer $10^4$nm ($10^5$ Å) haben, soll dagegen die Konzentration des Sauerstoffs im Meßgas gemessen werden, dann muß die Verteilung der Poren in dem Träger 43 für Knudsen-Diffusion ausgelegt sein; Einzelheiten hierzu sind aus der GB-P-2 049 952 entnehmbar.

Der Träger 43 ist bevorzugt zwar im Stirnbereich 42 des Schutzrohres 38 angeordnet, kann aber auch im zylindrischen Bereich des Schutzrohres 38 befestigt und z. B. von kreisringförmiger Konfiguration sein.

Der in Figur 2 teilweise dargestellte Sauerstoffmeßfühler 10' entspricht in seinem Aufbau im wesentlichen dem Sauerstoffmeßfühler 10 gemäß Figur 1; der Unterschied zwischen beiden liegt nur im Schutzrohr 38' mit seinem Diffusionswiderstandselement 43/2: Während das metallische Schutzrohr 38 mit seinen Flanschen 37 zwischen den beiden Kontakt- und Dichtringen 36 und 40 eingeklemmt ist und elektrische Funktionen übernimmt, besteht das Schutzrohr 38' des Sauerstoffmeßfühlers 10' aus einem keramischem Material (z. B. Aluminiumoxid) und ist meßgasfern mit einem Außengewinde 44 ausgestattet, welches mit einem Innengewinde 45 im meßgasnahen Endabschnitt der Längsbohrung 24' des Metallgehäuses 25' in Eingriff steht und unter Zuhilfenahme eines Dichtringes 46 eine gasdichte Verbindung mit dem Metallgehäuse 25' bewirkt. Zwischen dem meßgasfernen Endabschnitt der Meßelektrodenschicht 15' auf der Schulter 19' des Festelektrolytrohr-Flansches 14' und der Schulter 26' in der Längsbohrung 24' des Metallgehäuses 25' ist bei dieser Ausführungsform nur ein einziger Kontakt- und Dichtring 36' erforderlich.

Der meßgasseitige Stirnbereich 42' dieses keramischen Schutzrohres 38' ist derart ausgebildet, daß der Zwischenraum 39' zwischen dem Boden 13' des Festelektrolytrohres 12' und dem Schutzrohr 38' besonders klein gehalten ist, und daß der Stirnbereich 42' verstärkt ausgeführt ist; während durch den kleineren Zwischenraum 39' die Ansprechzeit des Sauerstoffmeßfühlers 10' im Vergleich zum Sauerstoffmeßfühler 10 verringert ist, ermöglicht der verstärkte Stirnbereich 42' ein direktes Anbringen eines Diffusionswiderstandselementes 43/2 im Schutzrohr 38': Als Diffusionswiderstandselement 43/2 kann in diesem Stirnbereich 42' wiederum ein Porenbereich wirken, es kann jedoch auch ein entsprechend dimensionierter (nicht dargestellter) Kanal (gegebenenfalls auch mehr als ein Kanal) als Diffusionsbarriere für Sauerstoffmoleküle zur Anwendung kommen.

Es sei ergänzend erwähnt, daß die in den Figuren 1 und 2 beschriebenen Arten der Befestigung des Schutzrohres 38 bzw. 38' am Metallgehäuse 25 bzw. 25' den Gegenstand der Erfindung nicht begrenzen, sondern nur Beispiele darstellen.

In der Figur 3 ist ein Querschnitt durch einen erfindungsgemäßen Sauerstoffmeßfühler 10" dargestellt, wobei das stabförmige Widerstandsheizelement mit 22", das Testelektrolytrohr mit 12", die Meßelektrode mit 15" und die Gegenelektrode mit 18" gekennzeichnet sind; das Schutzrohr 38" dieses Sauerstoffmeßfühlers 10" liegt bei dieser Ausführungsform mit seiner Innenseite direkt auf der Meßelektrodenschicht 15" auf, doch ist hier der Zwischenraum 39" zwischen dem Schutzrohr 38" und der Meßelektrodenschicht 15" durch Riefen, Nuten, eventuell sogar nur durch eine aufgerauhte Oberfläche gebildet. Das Schutzrohr 38" kann bei dieser Ausführungsform aus Metall oder aus einem keramischem Material hergestellt sein.

Die nach dem polarographischen Meßprinzip arbeitenden, vorstehend beschriebenen Sauerstoffmeßfühler 10, 10', 10" sind sehr robust und preisgünstig und decken bei Wahl eines zweckentsprechenden Diffusionswiderstandselementes eine große Feldbreite derartiger Sensoren ab, die keine besonderen Anforderungen an die Ansprechschnelligkeit stellen (z. B. Überwachung von Ofenatmosphären, Nachregelung der Langzeitdrift bei Brennern, Warnsensor für Sauerstoffmangel usw.).

Für der Fall, daß ein solcher Sauerstoffmeßfühler 10, 10', 10" in relativ schmutzigen Meßgasen zur Anwendung kommt, kann dem jeweiligen Diffusionswiderstandselement 43/1 bzw. 43/2 ein an sich bekanntes Filterelement vorgeschaltet werden; ein solches (nicht dargestelltes) Filterelement ist dann zweckmäßigerweise direkt vor dem Diffusionswiderstandselement 43/1 bzw. 43/2 am Schutzrohr 38 bzw. 38' einfach zu befestigen.

**Patentansprüche**

1. Polarographischer Sauerstoffmeßfühler (10") für Gase, mit einem Festelektrolytrohr (12"), das teilweise von einem Metallgehäuse (25) koaxial fest und dicht umgeben ist, meßgasseits mit einem Boden (13) verschlossen ist, auf der Oberfläche seiner Außenseite (14) eine schichtförmige, gasdurchlässige Meßelektrode (15") trägt, auf der Oberfläche seiner Innenseite (17) eine Gegenelektrode (18") trägt und vorzugsweise in seinem Meßbereich mittels eines elektrischen Widerstandselementes (22") beheizbar ist, wobei an die beiden Elektroden (15", 18") eine Gleichspannung anlegbar ist und ein Schutzrohr (38") vorgesehen ist, das das Festelektrolytrohr (12") mit seinen Elektroden (15", 18") vollständig umfaßt und ein Diffusionswiderstandselement (43/1, 43/2) aufweist, welches Sauerstoffmoleküle des Meßgases in den Zwischenraum (39") zwischen Schutzrohr (38") und Festelektrolytrohr (12") eintreten läßt, dadurch gekennzeichnet, daß das Schutzrohr (38") mit einem Teil seiner Innenseite auf der Oberfläche der Außenseite (14) des Festelektrolytrohres (12") mit der Meßelektrode (15") aufliegt und zwischen seinem anderen Teil und der Meßelektrode (15") mindestens ein kanalartiger Zwischenraum (39") gebildet ist, der mit dem Diffusionswiderstandselement (43/1, 43/2) in Wirkverbindung steht.

2. Polarographischer Sauerstoffmeßfühler nach Anspruch 1, dadurch gekennzeichnet, daß der kanalartige Zwischenraum (39") durch eine Riefe, eine Nute oder eine aufgerauhte Oberfläche gebildet ist.

3. Sauerstoffmeßfühler nach Anspruch 1 oder 2, dadurch gekennzeichnet, daß das Schutzrohr (38, 38', 38") im wesentlichen aus Metall oder aus Keramik besteht.

4. Sauerstoffmeßfühler nach einem der Ansprüche 1 bis 3, dadurch gekennzeichnet, daß sich das Diffusionswiderstandselement (43/1, 43/2) im meßgasseitigen Stirnbereich (42, 42') des Schutzrohres (38, 38') befindet.

5. Sauerstoffmeßfühler nach einem der Ansprüche 1 bis 4, dadurch gekennzeichnet, daß sich das Diffusionswiderstandselement (43/1) in einem am abgedichteten Schutzrohr (38) befestigten Träger (43) befindet.

6. Sauerstoffmeßfühler nach Anspruch 5, dadurch gekennzeichnet, daß der Träger (43), welcher das Diffusionswiderstandselement (43/1, 43/2) enthält, aus Metall oder Keramik besteht.

7. Sauerstoffmeßfühler nach einem der Ansprüche 1 bis 6, dadurch gekennzeichnet, daß das Diffusionswiderstandselement (43/1, 43/2) von mindestens einer kanalartigen Öffnung

gebildet ist.

8. Sauerstoffmeßfühler nach einem der Ansprüche 1 bis 6, dadurch gekennzeichnet, daß das Diffusionswiderstandselement (43/1, 43/2) von gasdurchlässigen Poren gebildet ist.

9. Sauerstoffmeßfühler nach einem der Ansprüche 1 bis 8, dadurch gekennzeichnet, daß das Diffusionswiderstandselement (43/1, 43/2) derart bemessen ist, daß es je nach Anwendungsfall entweder eine Gasphasen-Diffusion oder eine Knudsen-Diffusion bewirkt.

10. Sauerstoffmeßfühler nach einem der Ansprüche 1 bis 9, dadurch gekennzeichnet, daß der meßgasferne Abschnitt der Meßelektrode (15, 15') auf einer gasdichten Isolierschicht angeordnet ist, welche auf der Oberfläche der Außenseite des Festelektrolytrohres (12, 12') aufgebracht ist.

11. Sauerstoffmeßfühler nach einem der Ansprüche 1 bis 10, dadurch gekennzeichnet, daß das Schutzrohr (38') zwar abgedichtet, jedoch lösbar am Metallgehäuse (25') des Sauerstoffmeßfühlers (10') befestigt ist.

## Claims

1. Polarographic oxygen sensor (10'') for gases, with a solid electrolyte tube (12''), which is partially surrounded in coaxially fixed and sealed manner by a metal casing (25), closed by a base (13) on the measuring gas side, bears a gas-permeable measuring electrode (15'') in the form of a layer on the surface of its outside (14), bears a counter-electrode (18'') on the surface of its inside (17) and can preferably be heated in its measuring region by means of an electrical resistance heating element (22''), it being possible to apply a direct-current voltage to the two electrodes (15'', 18'') and there being provided a protective tube (38'') which completely encloses the solid electrolyte tube (12'') with its electrodes (15'', 18'') and has a diffusion resistance element (43/1, 43/2), which allows oxygen molecules of the measuring gas to enter into the intermediate space (39'') between protective tube (38'') and solid electrolyte tube (12''), characterized in that the protective tube (38'') rests with a part of its inside on the surface of the outside (14) of the solid electrolyte tube (12'') with the measuring electrode (15'') and between its other part and the measuring electrode (15'') there is formed at least one channel-like intermediate space (39'') which is in effective connection with the diffusion resistance element (43/1, 43/2).

2. Polarographic oxygen sensor according to Claim 1, characterized in that the channel-like intermediate space (39'') is formed by a groove, a slot or a roughened surface.

3. Oxygen sensor according to Claim 1 or 2, characterized in that the protective tube (38, 38', 38'') essentially consists of metal or of ceramic.

4. Oxygen sensor according to one of Claims 1 to 3, characterized in that the diffusion resistance element (43/1, 43/2) is in the end region (42, 42') on the measuring gas side of the protective tube (38, 38').

5. Oxygen sensor according to one of Claims 1 to 4, characterized in that the diffusion resistance element (43/1) is in a carrier (43) fastened to the sealed-off protective tube (38).

6. Oxygen sensor according to Claim 5, characterized in that the carrier (43) which contains the diffusion resistance element (43/1, 43/2) consists of metal or ceramic.

7. Oxygen sensor according to one of Claims 1 to 6, characterized in that the diffusion resistance element (43/1, 43/2) is formed by at least one channel-like opening.

8. Oxygen sensor according to one of Claims 1 to 6, characterized in that the diffusion resistance element (43/1, 43/2) is formed by gas-permeable pores.

9. Oxygen sensor according to one of Claims 1 to 8, characterized in that the diffusion resistance element (43/1, 43/2) is dimensioned such that either a gas-phase diffusion or a Knudsen diffusion is effected, depending on the application concerned.

10. Oxygen sensor according to one of Claims 1 to 9, characterized in that the section, remote from the measuring gas, of the measuring electrode (15, 15') is arranged on a gas-tight insulating layer, which is applied to the surface of the outside of the solid electrolyte tube (12, 12').

11. Oxygen sensor according to one of Claims 1 to 10, characterized in that the protective tube (38') is fastened to the metal casing (25') of the oxygen sensor (10') in sealed-off manner but nevertheless detachably.

## Revendications

1. Capteur d'oxygène polarographique (10'') pour des gaz, avec un tube à électrolyte solide (12''), qui est partiellement entouré coaxialement, de manière rigide et étanche, d'un carter en métal (25), qui est obturé côté gaz à mesurer, par un fond (13), qui porte une électrode de mesure (15'') en forme de couche, perméable aux gaz, qui est située sur la surface de son côté extérieur (14), qui porte une contre-électrode (18'') sur la surface de son côté intérieur (17) et est avantageuse chauffable dans sa zone de mesure, au moyen d'un élément résistant (22'') électrique, une tension continue étant applicable à cette occasion aux deux électrodes (15'', 18'') et un tube de protection (38'') étant prévu, qui contient complètement le tube à électrode solide (12'') avec ses électrodes (15'', 18'') et un élément résistant à diffusion (43/1, 43/2), qui laisse entrer des molécules d'oxygène du gaz à mesurer, dans l'espace intermédiaire (39'') qui est compris entre tube de protection (38'') et tube à électrolyte solide (12''), caractérisé en ce que le tube de protection (38'') appuie avec son côté intérieur, sur la surface du côté extérieur (14) du tube à électrode solide (12″), avec l'électrode de mesure (15″) et qu'au moins un espace intermédiaire (39″) en genre de canal est formé entre son autre partie et l'électrode de mesure (15″), qui est relié fonctionnellement à l'élément résistant à diffusion (43/1, 43/2).

2. Capteur d'oxygène polarographique selon la revendication 1, caractérisé en ce que l'espace intermédiaire (39″) en genre de canal est formé au moyen d'une cannelure, d'une gorge ou bien d'une surface rendue rugueuse.

3. Capteur d'oxygène polarographique selon la revendication 1 ou 2, caractérisé en ce que le tube de protection (38, 38′, 38″) est principalement composé de métal ou bien de céramique.

4. Capteur d'oxygène polarographique selon l'une des revendications 1 à 3, caractérisé en ce que l'élément résistant à diffusion (43/1, 43/2) se trouve dans la zone frontale (42, 42′) du tube de protection (38, 38′).

5. Capteur d'oxygène polarographique selon l'une des revendications 1 à 4, caractérisé en ce que l'élément résistant à diffusion (43/1) se trouve dans un support (43) qui est fixé sur le tube de protection (38) étanche.

6. Capteur d'oxygène polarographique selon la revendication 5, caractérisé en ce que le support (43) qui contient l'élément résistant à diffusion (43/1, 43/2) est composé de métal, ou bien de céramique.

7. Capteur d'oxygène polarographique selon l'une des revendications 1 à 6, caractérisé en ce que l'élément résistant à diffusion (43/1, 43/2) est forme d'au moins une ouverture en genre de canal.

8. Capteur d'oxygène polarographique selon l'une des revendications 1 à 6, caractérisé en ce que l'élément résistant à diffusion (43/1, 43/2) est formé de pores perméables aux gaz.

9. Capteur d'oxygène polarographique selon l'une des revendications 1 à 8, caractérisé en ce que l'élément résistant à diffusion (43/1, 43/2) est dimensionné de telle sorte, que selon le cas d'application il provoque soit une diffusion en phase gazeuse, soit une diffusion de Knudsen.

10. Capteur d'oxygène polarographique selon l'une des revendication 1 à 9, caractérisé en ce que la section de l'électrode de mesure (15, 15′) à distance du gaz à mesurer est disposée sur une couche isolante étanche aux gaz, et est appliquée sur la surface du côté extérieur du tube à électrolyte solide (12, 12′).

11. Capteur d'oxygène polarographique selon l'une des revendication 1 à 10, caractérisé en ce que le tube de protection (38′) est certes étanché, mais qu'il est toutefois fixé de manière détachable sur le carter en métal (25′) du capteur d'oxygène (10′).

0 151 795

**Fig. 1**

**Fig. 2**

**Fig. 3**